# FASCICULE DE BREVET EUROPEEN

(11) **EP 2 441 675 B1**
(45) Date de publication et mention de la délivrance du brevet: **20.04.2016**
(21) Numéro de dépôt: 11306332.5
(22) Date de dépôt: 14.10.2011
(51) Int. Cl.: B64D 33/02

(54) **Nacelle d'aéronef incorporant au moins une cloison radiale entre deux conduits**
Luftfahrzeuggondel, die mindestens eine radiale Trennwand zwischen zwei Leitungen umfasst
Aircraft nacelle including at least one radial partition between two conduits

(30) Priorité: 15.10.2010 FR 1058430
(43) Date de publication de la demande: 18.04.2012
(73) Titulaire: Airbus Opérations SAS, 31060 Toulouse (FR)
(72) Inventeur: Porte, Alain, 31770 Colomiers (FR); Lalane, Jacques, 31650 Saint Orens de Gameville (FR); Chelin, Frédéric, 32430 Encausse (FR); Surply, Thierry, 31700 Cornebarrieu (FR)
(74) Mandataire: Fantin, Laurent

(56) Documents cités:
- EP-A1- 1 369 555
- FR-A1- 2 936 223
- FR-A1- 2 940 377
- US-A1- 2004 094 359

## Description

La présente invention se rapporte à une nacelle d'aéronef incorporant au moins une cloison radiale au niveau de la zone de jonction de deux conduits canalisant un flux d'air.

Un ensemble propulsif d'aéronef comprend une nacelle dans laquelle est disposée de manière sensiblement concentrique une motorisation.

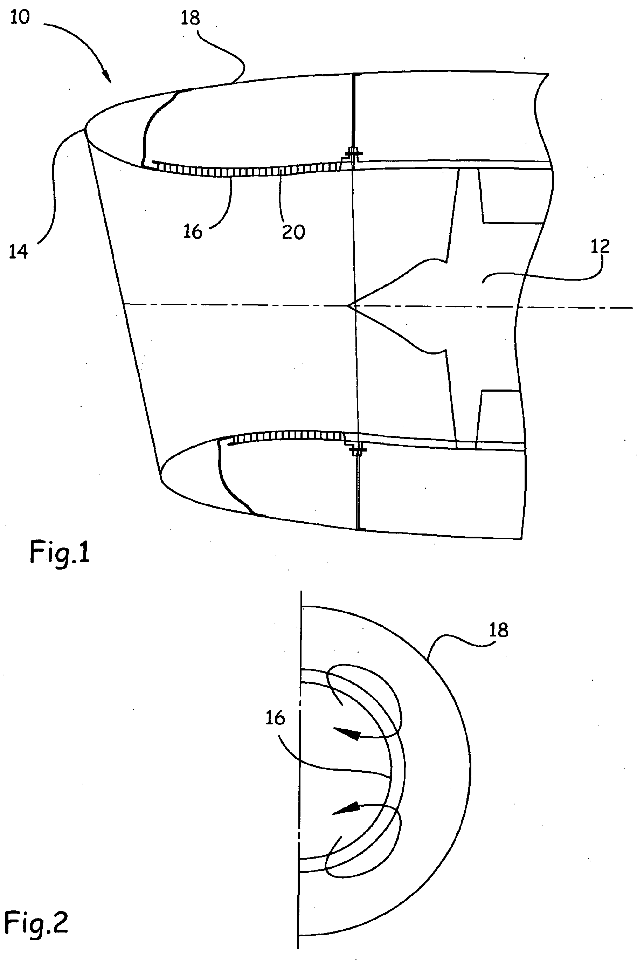

Comme illustré sur la figure 1, la nacelle comprend à l'avant une entrée d'air 10 permettant de canaliser un flux d'air dans une motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 10 comprend une lèvre 14 dont la surface en contact avec les flux aérodynamiques est prolongée à l'intérieur de la nacelle par un conduit intérieur 16 et à l'extérieur de la nacelle par une paroi extérieure 18.

Des techniques ont été développées pour réduire le bruit émis par un aéronef, et notamment le bruit émis par les ensembles propulsifs. Elles consistent à placer au niveau notamment de la paroi du conduit intérieur 16, un panneau 20 visant à absorber une partie de l'énergie sonore, notamment en utilisant le principe des résonateurs d'Helmholtz.

EP 1369555 A1 divulgue les caractéristiques du préambule de la revendication 1.

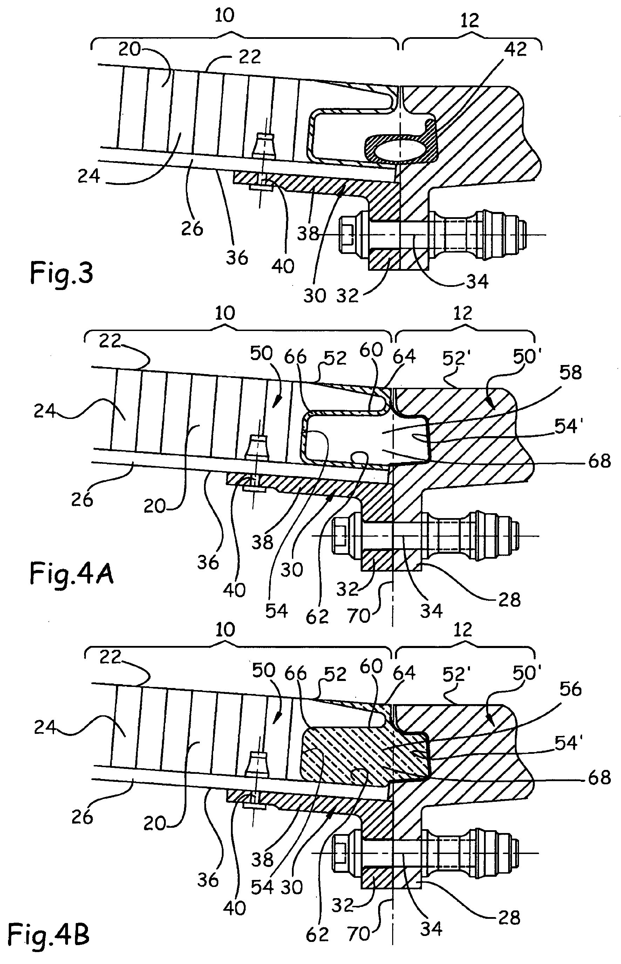

De manière connue, un panneau pour le traitement acoustique 20, comprend de l'extérieur vers l'intérieur une couche poreuse acoustiquement résistive 22, au moins une structure alvéolaire 24 et une couche réflectrice ou imperméable 26. L'entrée d'air 10 est reliée à la motorisation 12 par une liaison illustrée en détails sur la figure 3. Cette liaison comprend au niveau de la motorisation une collerette annulaire 28 à laquelle est solidarisée une bride 30. Cette bride a une section en L dont une aile 32 est plaquée contre la collerette 28 et solidarisée à cette dernière par tous moyens appropriés, par exemple des boulons ou des rivets 34, traversant la collerette et l'aile 32 de la bride et s'étendant parallèlement à l'axe longitudinal de la nacelle. De préférence, cette bride 30 s'étend sur la circonférence du conduit 16 et peut être réalisée en plusieurs tronçons. La bride 30 est reliée à l'entrée d'air 10 et plus particulièrement à la surface arrière 36 du panneau 20 pour le traitement acoustique délimitant le conduit intérieur 16.

A cet effet, la seconde aile 38 de la bride 30 est plaquée contre la surface arrière 36 du panneau acoustique et solidarisée à ce dernier par tous moyens appropriés, notamment des boulons ou des rivets 40 orientés radialement.

Lors des phases de vol, il existe des gradients de pression dans la nacelle au niveau de la zone de jonction entre l'entrée d'air et la motorisation comme illustré sur la figure 1. Ces gradients de pression peuvent générer des flux d'air parasites qui pénètrent derrière la paroi intérieure en un premier point de la zone de jonction pour ressortir en un autre point de ladite zone, comme illustré sur la figure 2. Ces flux d'air parasites génèrent des perturbations au niveau du flux d'air secondaire qui dégradent les performances aérodynamiques de la motorisation.

Pour limiter l'apparition de ces flux d'air parasites, une solution consiste à intercaler entre l'entrée d'air et la motorisation un joint 42 (visible sur la figure 3) qui s'étend sur toute la périphérie de l'entrée d'air.

Ce joint 42 annulaire a un coût de revient non négligeable. De plus, pour des diamètres importants de nacelle, le joint peut avoir une longueur de l'ordre de 9 m qui tend à augmenter la masse embarquée.

Aussi, la présente invention vise à proposer une solution alternative simple, tout aussi efficace et qui limite l'augmentation de la masse embraquée par rapport aux solutions de l'art antérieur.

A cet effet, l'invention a pour objet une nacelle d'aéronef telle que définie par les caractéristiques techniques de la revendication 1 permettant de canaliser un flux d'air selon une direction longitudinale et comportant au moins deux panneaux mis bout à bout selon la direction longitudinale, comprenant chacun une surface dite aérodynamique en contact avec le flux d'air et un chant en contact avec le chant de l'autre panneau, caractérisée en ce qu'au moins l'un des panneaux comprend au niveau de son chant au moins une cloison en saillie par rapport audit chant qui s'étend en direction du chant de l'autre panneau, de manière sécante à la surface aérodynamique et dans un plan contenant la direction longitudinale, afin de limiter la circulation d'air entre les chants des panneaux.

D'autres caractéristiques et avantages ressortiront de la description qui va suivre de l'invention, description donnée à titre d'exemple uniquement, en regard des dessins annexés sur lesquels :
- La figure 1 est une coupe selon un plan longitudinal et vertical de l'avant d'une nacelle d'aéronef,
- La figure 2 est une coupe transversale au niveau d'une zone de jonction entre deux conduits illustrant les risques de flux parasites selon l'art antérieur,
- La figure 3 est une coupe selon un plan longitudinal et vertical illustrant en détails l'interface entre deux conduits selon l'art antérieur,
- La figure 4A est une coupe selon un plan longitudinal et vertical illustrant en détails l'interface entre deux conduits selon l'invention,
- La figure 4B est une coupe selon un plan longitudinal contenant une cloison illustrant en détails l'interface entre deux conduits selon l'invention, et
- Les figures 5A et 5B sont des schémas illustrant des cloisons permettant de limiter la recirculation d'air selon différentes configurations de l'invention.

Sur les figures 4A et 4B, on a représenté en détails la zone de jonction entre le conduit intérieur 16 de l'entrée d'air d'une nacelle d'aéronef et le conduit de la motorisation 12. Ces conduits sont délimités par des parois épaisses, avec une épaisseur supérieure ou égale à 30 mm.

Ces conduits peuvent être constitués d'une seule pièce qui s'étend sur toute leur circonférence ou de plusieurs secteurs angulaires assemblés de manière adéquate. L'assemblage de ces deux conduits entre eux n'est pas plus détaillé car il est connu de l'homme du métier.

Selon un mode de réalisation, le conduit intérieur peut être délimité par un panneau pour le traitement acoustique 20 qui comprend de l'extérieur vers l'intérieur, une couche poreuse acoustiquement résistive 22, au moins une structure alvéolaire 24 et une couche réflectrice ou imperméable 26.

De la même manière, le conduit de la motorisation peut être également délimité par un panneau pour le traitement acoustique et/ou par un panneau de protection permettant entre autres d'absorber une partie de l'énergie en cas de bris de pales de la soufflante de la motorisation.

Bien qu'appliquée à la zone de jonction entre le conduit intérieur et le conduit de la motorisation, l'invention n'est aucunement limitée à cette zone et peut s'appliquer à toutes les zones de jonction entre deux panneaux d'une nacelle d'aéronef mis bout à bout selon le sens d'écoulement d'un flux d'air, appelé également direction longitudinale. Ainsi, comme illustré sur les figures 4A et 4B, chaque panneau 50, 50' comprend une surface 52, 52' dite aérodynamique en contact avec le flux d'air et une surface 54, 54' appelée chant susceptible d'être en contact avec le chant de l'autre panneau.

Lorsque les deux chants 54, 54' sont mis en contact, ils peuvent délimiter entre eux une cavité 56 qui, dans le cas de deux conduits mis bout à bout, peut être annulaire et s'étendre sur toute la circonférence.

Selon l'invention, au moins l'un des panneaux comprend au niveau de son chant 54, 54' au moins une cloison 58 en saillie par rapport audit chant qui s'étend en direction du chant de l'autre panneau, de manière sécante à la surface aérodynamique, afin de limiter la circulation d'air entre les chants des panneaux. Par cloison, on entend une paroi dont l'épaisseur est sensiblement inférieure par rapport aux autres dimensions des faces de ladite paroi.

La présence d'au moins une cloison qui s'étend en travers et entre les chants permet de limiter l'apparition de flux parasites tout en limitant la masse embarquée compte tenu du fait que les cloisons sont des éléments ponctuels qui ne s'étendent pas sur toute la circonférence du conduit à la manière d'un joint annulaire de l'art antérieur.

Dans le cas de gradients de pression qui varient le long des chants des panneaux, ladite au moins une cloison est de préférence disposée au niveau des gradients les plus importants.

Dans le cas du conduit intérieur d'une entrée d'air, le panneau pour le traitement acoustique 20 comprend au niveau du chant 54 un renfort structural 60 qui s'étend sur la circonférence du conduit 16 et qui est réalisé en au moins un tronçon.

Ce renfort structural 60 est plaqué contre la couche réflectrice 26 et placé dans le prolongement de la couche poreuse acoustiquement résistive 22 et de la structure alvéolaire 24. Ce renfort structural 60 a, selon un plan radial, une section en forme de Z, avec une première partie 62 plaquée contre la couche réflectrice 26, une deuxième partie 64 en contact avec les flux aérodynamiques assurant le prolongement entre le conduit intérieur 16 de l'entrée d'air et le conduit de la motorisation 12 et une troisième partie dite intermédiaire 66 reliant les parties 62 et 64 délimitant un dégagement 68.

Ce dégagement 68 génère une cavité annulaire entre les deux conduits.

Selon un mode de réalisation illustré sur les figures 4A et 4B, le chant 54' du conduit de la motorisation peut également avoir une forme en C. Dans ce cas, la cavité annulaire peut s'étendre de part et d'autre de la surface de jonction 70 matérialisée par un trait mixte sur les figures 4A et 4B.

Selon l'invention, au moins une cloison 58 s'étend en travers de la cavité annulaire de manière à limiter l'apparition de flux d'air parasites entre les chants 54, 54' des conduits. Indifféremment, la ou les cloisons 58 sont reliées au conduit intérieur 16 de l'entrée d'air ou au conduit de la motorisation.

De préférence, les cloisons sont disposées radialement, à savoir dans des plans contenant la direction longitudinale.

Selon un mode de réalisation, la ou les cloisons 58 sont reliées au conduit intérieur 16 et plus particulièrement au renfort structural 60. En variante, elles peuvent être reliées à la motorisation 12.

Les cloisons sont de préférence disposées de manière symétrique par rapport au plan longitudinal vertical.

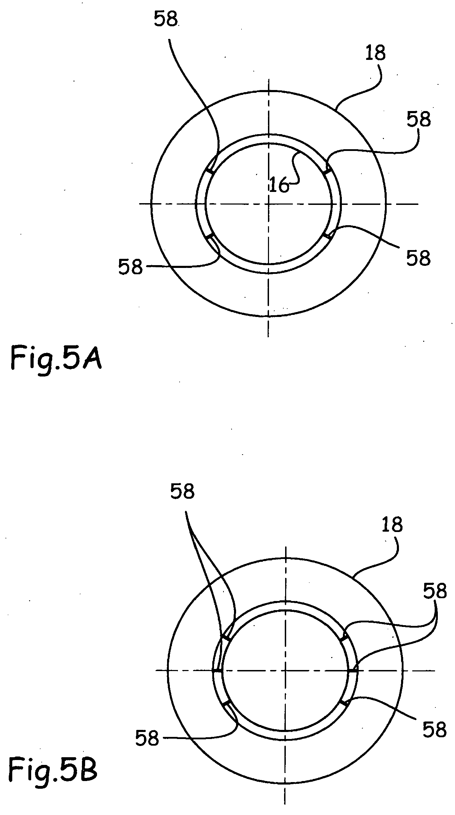

Selon un premier agencement illustré sur la figure 5A, la zone de jonction comprend quatre cloisons 58 disposées à 45°, 135°, 225° et 315°, l'origine correspondant à la partie sommitale du conduit.

Selon un second agencement illustré sur la figure 5B, la zone de jonction comprend six cloisons 58 disposées à 45°, 90°, 135°, 225°, 270° et 315°. Avantageusement, les cloisons 58 sont disposées dans les zones où les gradients de pression sont les plus importants, à savoir de part et d'autre du plan longitudinal horizontal.

Selon les variantes, la ou les cloisons 58 peuvent être métalliques et/ou en matériau composite.

## Revendications

1. Nacelle d'aéronef permettant de canaliser un flux d'air selon une direction longitudinale, ladite nacelle comportant :
- au moins deux panneaux (50, 50') mis bout à bout selon la direction longitudinale, comprenant chacun une surface (52, 52') aérodynamique en contact avec le flux d'air et un chant (54, 54') en contact avec le chant de l'autre panneau, et
- une cavité (55) annulaire prévue entre les deux chants (54, 54'), au moins l'un des panneaux comprant au niveau de son chant (54, 54') au moins une cloison (58) en saillie par rapport audit chant qui s'étend en direction du chant de l'autre panneau, de manière sécante à la surface aérodynamique **caractérisée en ce que** ladite cloison (58) est un élément ponctuel qui ne s'étend pas sur toute la circonférence de la cavité (56) annulaire, ladite cloison (58) s'étendant en travers de la cavité (56) annulaire dans un plan contenant la direction longitudinale afin de limiter la circulation d'air entre les chants des panneaux.

2. Nacelle d'aéronef selon la revendication 1, ladite nacelle comportant des gradients de pression qui varient le long des chants des panneaux, **caractérisée en ce que** ladite au moins une cloison (58) est disposée au niveau des gradients les plus importants.

3. Nacelle d'aéronef selon la revendication 1 ou 2, comportant une entrée d'air avec un conduit intérieur (16) permettant de canaliser un flux d'air en direction d'un conduit d'une motorisation (12), lesdits conduits étant disposés bout à bout selon la direction longitudinale, le conduit intérieur (16) comportant au niveau de son chant orienté vers le conduit de la motorisation un dégagement (68) qui délimite avec le chant du conduit de la motorisation une cavité annulaire, **caractérisée en ce qu'**elle comprend au moins une cloison (58) qui s'étend en travers de la cavité annulaire de manière à limiter l'apparition de flux d'air parasites entre les chants (54, 54') des conduits.

4. Nacelle d'aéronef selon la revendication 3, **caractérisée en ce qu'**elle comprend plusieurs cloisons (58) disposés dans des plans contenant la direction longitudinale.

5. Nacelle d'aéronef selon la revendication 3 ou 4, **caractérisée en ce qu'**elle comprend plusieurs cloisons (58) disposées de manière symétrique par rapport au plan longitudinal vertical.

6. Nacelle d'aéronef selon la revendication 5, **caractérisée en ce qu'**elle comprend quatre cloisons (58) disposées à 45°, 135°, 225° et 315°, l'origine correspondant à la partie sommitale du conduit.

7. Nacelle d'aéronef selon la revendication 5, **caractérisée en ce qu'**elle comprend six cloisons (58) disposées à 45°, 90°, 135°, 225°, 270° et 315°, l'origine correspondant à la partie sommitale du conduit.

## Patentansprüche

1. Gondel eines Luftfahrzeugs, die es gestattet, einen Luftstrom in eine Längsrichtung zu kanalisieren, mit:
- wenigstens zwei Platten (50, 50'), die in Längsrichtung aneinandergesetzt sind und die jeweils eine in Kontakt mit dem Luftstrom stehende aerodynamische Oberfläche (52, 52') und eine Schmalseite (54, 54') aufweisen, die in Kontakt mit der Schmalseite der anderen Platte steht, und
- einem zwischen den Schmalseiten (54, 54') vorgesehenen ringförmigen Hohlraum (56),
wobei wenigstens eine der Platten im Bereich ihrer Schmalseite (54, 54') eine bezüglich der Schmalseite vorspringende Trennwand (58) aufweist, die sich zur aerodynamischen Oberfläche sekantenartig in Richtung der Schmalseite der anderen Platte erstreckt, **dadurch gekennzeichnet, dass** die Trennwand (58) ein punktuelles Element ist, das sich nicht über den gesamten Umfang des ringförmigen Hohlraums (56) erstreckt, wobei sich die Trennwand (58) quer durch den ringförmigen Hohlraum (56) in einer Ebene erstreckt, die die Längsrichtung enthält, um die Luftzirkulation zwischen den Schmalseiten der Platten zu begrenzen.

2. Gondel eines Luftfahrzeugs nach Anspruch 1, wobei die Gondel Druckgradienten aufweist, die sich entlang den Schmalseiten der Platten ändern, **dadurch gekennzeichnet, dass** wenigstens eine Trennwand (58) im Bereich der wichtigsten Gradienten angeordnet ist.

3. Gondel eines Luftfahrzeugs nach Anspruch 1 oder 2, die einen Lufteinlass mit einem inneren Kanal (16) aufweist, der es gestattet, einen Luftstrom in Richtung eines Kanals einer Motorisierung (12) zu kanalisieren, wobei die Kanäle in Längsrichtung aneinanderliegend angeordnet sind und wobei der innere Kanal (16) im Bereich seiner zum Kanal der Motorisierung ausgerichteten Schmalseite einen Einzug (68) aufweist, der mit der Schmalseite des Kanals der Motorisierung einen ringförmigen Hohlraum begrenzt, **dadurch gekennzeichnet, dass** diese wenigstens eine Trennwand (58) aufweist, die sich durch den ringförmigen Hohlraum hindurch erstreckt, um das Auftreten von parasitären Luftströmungen zwischen den Schmalseiten (54, 54') der Kanäle zu begrenzen.

4. Gondel eines Luftfahrzeugs nach Anspruch 3, **dadurch gekennzeichnet, dass** diese mehrere Trennwände (58) aufweist, die in Ebenen angeordnet sind, die die Längsrichtung enthalten.

5. Gondel eines Luftfahrzeugs nach Anspruch 3 oder 4, **dadurch gekennzeichnet, dass** diese mehrere Trennwände (58) aufweist, die auf symmetrische Weise bezügliche einer senkrechten Längsebene angeordnet sind.

6. Gondel eines Luftfahrzeugs nach Anspruch 5, **dadurch gekennzeichnet, dass** diese vier Trennwände (58) aufweist, die bei 45°, 135°, 225° und 315° angeordnet sind, wobei der Nullpunkt dem Scheitelpunkt des Kanals entspricht.

7. Gondel eines Luftfahrzeugs nach Anspruch 5, **dadurch gekennzeichnet, dass** diese sechs Trennwände (58) aufweist, die bei 45°, 90°, 135°, 225°, 270° und 315° angeordnet sind, wobei der Nullpunkt dem Scheitelpunkt des Kanals entspricht.

## Claims

1. Aircraft nacelle that makes it possible to channel a stream of air in a longitudinal direction, said nacelle comprising :
- at least two panels (50, 50') placed end to end in the longitudinal direction, each comprising a so-called aerodynamic surface (52, 52') that is in contact with the air stream and an edge (54, 54') that is in contact with the edge of the other panel, and
- an annular cavity (56) arranged between the two edges (54, 54'), at least one of the panels comprising - at its edge (54, 54') - at least one partition (58) that projects relative to said edge that extends in the direction of the edge of the other panel, in a manner that is secant to the aerodynamic surface, **characterized in that** said partition (58) is a point element that do not extend over the entire circumference of the annular cavity (56), said partition (58) extending across the annular cavity (56) in a plane that contains the longitudinal direction, so as to limit the circulation of air between the edges of the panels.

2. Aircraft nacelle according to Claim 1, with said nacelle comprising pressure gradients that vary along the edges of the panels, wherein said at least one partition (58) is arranged at the largest gradients.

3. Aircraft nacelle according to Claim 1 or 2, comprising an air intake with an inside pipe (16) that makes it possible to channel a stream of air in the direction of a pipe of a power plant (12), whereby said pipes are arranged end to end in the longitudinal direction, with the inside pipe (16) comprising - at its edge oriented toward the pipe of the power plant - a release (68) that delimits an annular cavity with the edge of the pipe of the power plant, wherein it comprises at least one partition (58) that extends across the annular cavity in such a way as to limit the appearance of parasitic air streams between the edges (54, 54') of the pipes.

4. Aircraft nacelle according to Claim 3, wherein it comprises several partitions (58) that are arranged in planes that contain the longitudinal direction.

5. Aircraft nacelle according to Claim 3 or 4, wherein it comprises several partitions (58) that are arranged in a symmetrical manner relative to the vertical longitudinal plane.

6. Aircraft nacelle according to Claim 5, wherein it comprises four partitions (58) that are arranged at 45°, 135°, 225°, and 315°, the origin corresponding to the top part of the pipe.

7. Aircraft nacelle according to Claim 5, wherein it comprises six partitions (58) arranged at 45°, 90°, 135°, 225°, 270°, and 315°, with the origin corresponding to the top part of the pipe.
